(19) **Europäisches Patentamt / European Patent Office / Office européen des brevets**

(11) **EP 2 791 636 B1**

(12) **FASCICULE DE BREVET EUROPEEN**

(45) Date de publication et mention
de la délivrance du brevet:
**09.01.2019 Bulletin 2019/02**

(21) Numéro de dépôt: **12801595.5**

(22) Date de dépôt: **14.12.2012**

(51) Int Cl.:
**G01J 3/26** *(2006.01)* **G01J 3/453** *(2006.01)*
**G02B 26/00** *(2006.01)* **G02B 27/14** *(2006.01)*

(86) Numéro de dépôt international:
**PCT/EP2012/075601**

(87) Numéro de publication internationale:
**WO 2013/087867 (20.06.2013 Gazette 2013/25)**

(54) **LAME INTERFEROMETRIQUE A DEUX ONDES COMPORTANT UNE CAVITE PLEINE PARTIELLEMENT RESONANTE ET SON PROCEDE DE FABRICATION**

INTERFEROMETRISCHE ZWEI-WELLEN-PLATTE MIT EINEM TEILWEISE RESONANTEN VOLLSTÄNDIGEN HOHLRAUM UND VERFAHREN ZU SEINER HERSTELLUNG

TWO-WAVE INTERFEROMETRIC PLATE COMPRISNG A PARTIALLY RESONANT FULL CAVITY AND ITS METHOD OF MANUFACTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2011 FR 1161675**

(43) Date de publication de la demande:
**22.10.2014 Bulletin 2014/43**

(73) Titulaires:
• **Office National d'Etudes et de Recherches Aérospatiales**
**91120 Palaiseau (FR)**
• **Silios Technologies**
**13790 Peynier (FR)**

(72) Inventeurs:
• **TISSERAND, Stéphane**
**F-13006 Marseille (FR)**
• **GUERINEAU, Nicolas**
**F-92160 Antony (FR)**

(74) Mandataire: **Brevalex**
**95, rue d'Amsterdam**
**75378 Paris Cedex 8 (FR)**

(56) Documents cités:
**EP-A1- 1 482 288    US-A1- 2008 186 508**

**Description**

**DOMAINE TECHNIQUE**

La présente demande concerne les domaines techniques de la détection et de l'analyse quantitative du contenu spectral d'une source lumineuse. Plus particulièrement, l'invention peut appartenir aux domaines techniques utilisant des dispositifs interférométriques à deux ondes pour observer, de préférence dans le domaine de l'infrarouge, une source lumineuse étendue ou non.

**ÉTAT DE LA TECHNIQUE ANTÉRIEURE**

L'étude d'une source lumineuse peut consister à décomposer son spectre d'émission en longueurs d'onde ou bien en fréquences pour connaître ses caractéristiques physiques. Le spectre d'émission peut être obtenu à partir d'un dispositif interférométrique, interposé entre la source lumineuse étudiée et un dispositif de détection optique. Le dispositif interférométrique permet de diviser un faisceau lumineux, issu de la source, en plusieurs faisceaux. La superposition de ces faisceaux à l'intérieur ou à l'extérieur du dispositif interférométrique forme, dans un plan de localisation, une figure d'interférence. Un plan de détection du dispositif optique est confondu avec le plan de localisation afin de permettre à des moyens de mesure et des moyens de traitement du signal de déterminer les caractéristiques physiques de la source lumineuse. Il existe principalement deux types de dispositif interférométrique se différenciant selon que le phénomène interférométrique mis en jeux est à ondes multiples ou à deux ondes.

Le premier type de dispositif interférométrique, dit à ondes multiples, se caractérise par la présence d'une cavité optique, c'est-à-dire, une cavité comportant deux faces réfléchissantes, parallèles et en vis-à-vis. Le coefficient de réflexion moyen R (voir ci-dessous) de ces faces est typiquement supérieur à 90 % pour que l'intensité d'un faisceau lumineux présent dans la cavité optique soit peu atténuée après plusieurs réflexions sur les faces internes de la cavité. Les ondes lumineuses ne vérifiant pas les conditions de résonance de la cavité optique, interfèrent dans celle-ci de façon destructive. Par contre, les ondes vérifiant ces conditions augmentent leur intensité en se superposant. On parle alors de phénomène d'interférence à ondes multiples car, une onde pénétrant dans la cavité optique interfère avec plusieurs ondes présentes dans ladite cavité.

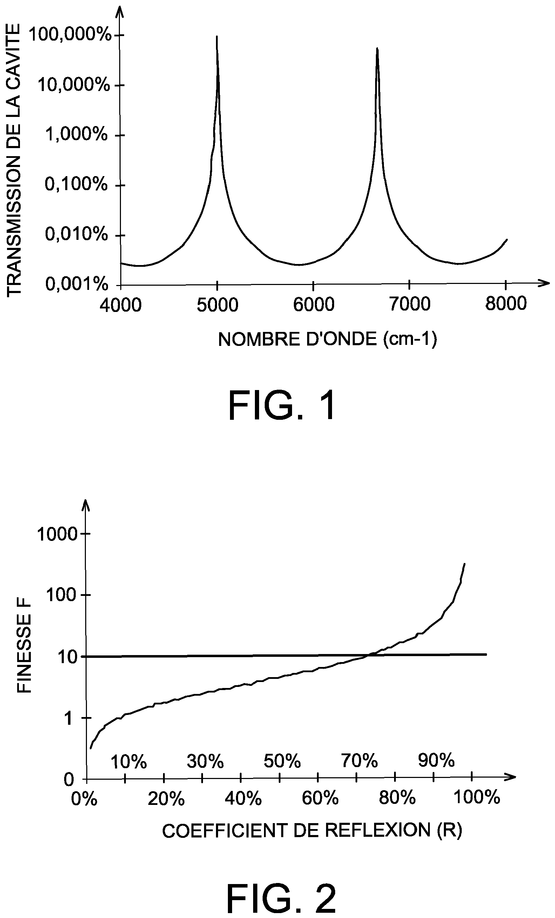

Une onde ou un faisceau lumineux sortant d'un dispositif interférométrique à ondes multiples se caractérise par une intensité maximale à la longueur d'onde $\lambda$, vérifiant les conditions de résonance de la cavité optique. Autrement dit, la transmission d'une onde à travers la cavité optique est maximale pour des valeurs périodiques de son nombre d'onde ($1/\lambda$) vérifiant ces conditions de résonance (figure 1). Ce type de dispositif réalise donc un filtrage interférentiel de longueurs d'onde de la source lumineuse étudiée. Son spectre d'émission peut alors être obtenu directement, par l'intermédiaire de cavités optiques différentes mises en parallèle (US 4,822,998 ; US 2006/0209413 ; FR 2926635). Chaque cavité transmet alors de manière privilégiée qu'une seule longueur d'onde incidente et ses sous-multiples.

Si on note $R_1$ et $R_2$ les coefficients de réflexion de deux faces internes constituant une cavité, le coefficient de réflexion moyen de cette cavité est défini par :

$$R = \sqrt{R_1 R_2}$$

Ce coefficient de réflexion moyen est relié à la finesse F de la cavité par la formule :

$$F = \frac{\pi \sqrt{R}}{(1 - R)}.$$

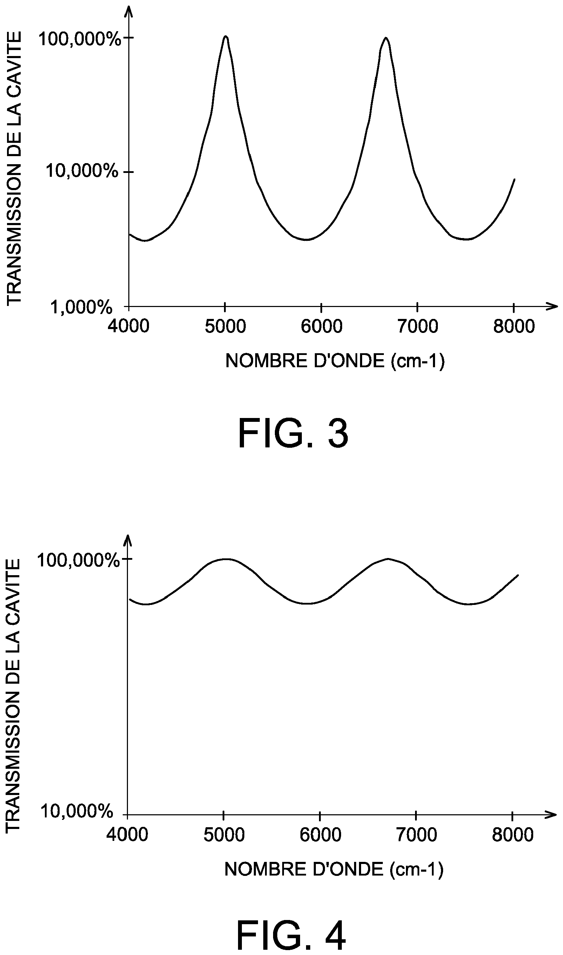

La finesse F décrit la capacité de la cavité à isoler une longueur d'onde (figure 2), elle est inversement proportionnelle à la largeur spectrale d$\lambda$ transmise autour d'une longueur d'onde donnée. Une finesse égale à 200, correspondant à un coefficient de réflexion moyen de 99 %, permet d'obtenir des raies de transmission suffisamment fines pour déterminer avec précision leur nombre d'onde (figure 1). Pour une finesse égale à 10, soit un coefficient de réflexion moyen de 72 %, les mesures sont moins précises en raison de l'élargissement des raies (figure 3). En dessous d'une finesse égale à 10, les raies sont trop larges pour permettre de réaliser un filtrage interférentiel d'une source lumineuse (figure 4). On définit alors ce type de cavité, dont la finesse est inférieure à 10, comme étant partiellement résonante, par rapport aux cavités optique qui mettent en jeu un grand nombre d'ondes (plusieurs dizaines).

C'est pour cette raison que les cavités optiques, pour avoir une valeur de finesse F la plus grande possible, sont généralement délimitées par des miroirs ou des faces recouvertes par des matériaux hautement réfléchissant, comme par exemple de l'argent, dont les coefficients de réflexion sont supérieurs à 90 %.

**EP 2 791 636 B1**

Ces faces hautement réfléchissantes ont l'inconvénient d'être délicates et coûteuses à réaliser. De plus, leur coefficient de réflexion peut rapidement être dégradé par la présence de particules ou de défauts à leur surface.

Le positionnement de ces faces est également critique pour former une cavité optique avec une résolution souhaitée. Par exemple, pour obtenir une résolution dλ de 5 nm dans le domaine du visible, il faut séparer les deux faces internes d'une cavité optique avec une précision supérieure à dλ/2, soit 2,5 nm.

Les dispositifs interférométriques à ondes multiples sont donc délicats à fabriquer, à manipuler et se prêtent mal à une production industrielle en grande quantité. De plus, ils sont très sensibles à leur environnement : poussières, humidité...

Une solution intéressante pour résoudre les inconvénients précédents consiste à employer un dispositif interférométrique mettant en jeu un phénomène interférentiel à deux ondes majoritaires ou à deux ondes. A la différence du dispositif interférométrique à ondes multiples, le dispositif interférométrique à deux ondes a une cavité délimitée par deux faces, dont le coefficient de réflexion moyen est inférieur à 70 %. C'est donc une cavité partiellement résonante. Son fonctionnement est différent de celui d'un filtre interférentiel car, le nombre limité (à environ 2) de réflexions sur lesdites deux faces des faisceaux transmis d'amplitude significative, conduit à ce que l'ensemble du spectre fréquentiel soit transmis, les amplitudes des différentes longueurs d'onde étant cependant atténuées du fait de la faiblesse du coefficient de réflexion moyen.

Le dispositif interférométrique selon l'invention est dimensionné de sorte à permettre une spectrométrie par mesure de cohérence temporelle, il n'est pas dimensionné pour faire du filtrage interférentiel. Les conditions de réalisation et d'utilisation clairement différentes, sont alors moins rigoureuses et moins contraignantes.

Un dispositif interférométrique à deux ondes permet de superposer, comme son nom l'indique, une première onde non réfléchie et une deuxième onde réfléchie sur au moins une face interne de la cavité partiellement résonnante. Ces deux ondes se superposent dans une zone de recouvrement présente à l'intérieur ou bien à l'extérieur de la cavité, pour former un volume d'interférence. Lorsqu'on place un plan de détection dans ce volume, il se forme dans un plan privilégié une figure d'interférence caractérisée par une alternance de franges sombres et de franges claires. Ce plan privilégié correspond au plan de localisation. Les franges claires correspondent à une interférence constructive d'ondes de même longueur d'onde et en phase, et les franges sombres à une interférence destructive d'ondes de même longueur d'onde et en opposition de phase.

Les faces internes de la cavité partiellement résonante peuvent être agencées de deux façons différentes.

Lorsqu'elles sont parallèles entre elles et que la source de lumière à étudier est à l'infini et présente une très petite taille angulaire (typiquement inférieure à 1°), le contraste des franges d'interférence est constant et ce quelle que soit la position du plan de détection.

Un exemple de ce type de dispositif est décrit dans le document US 6,016,199. Dans ce document, une cavité non remplie de matière, est formée par superposition de deux lames. Les deux lames sont évidées pour former une cavité partiellement résonnante. L'évidement est réalisé au niveau de chaque lame, pour former par une technique d'usinage, une face réfléchissante dont le profil est en marche d'escalier. De cette façon, la distance séparant les deux faces réfléchissantes varie entre chaque marche, plusieurs teintes plates peuvent ainsi être obtenues, simultanément, à partir d'une même source lumineuse. L'un des inconvénients de cette méthode de fabrication est la nécessité d'usiner individuellement chaque lame, augmentant de ce fait le coût de production d'un tel dispositif.

Si les faces internes de la cavité partiellement résonante ne sont pas parallèles entre elles, le volume d'interférence présente un plan de localisation dans lequel le contraste est maximal. La valeur de l'angle d'inclinaison entre le plan de localisation et l'une des faces précédentes dépend directement de l'angle d'incidence du faisceau lumineux sur le dispositif interférométrique. Ce deuxième type de dispositif est donc sensible à la position ainsi qu'à la taille angulaire de la source étudiée.

Lorsque la source lumineuse est étendue, il est délicat de faire coïncider le plan de localisation avec le plan de détection d'un dispositif optique.

Une alternative pour diminuer la taille angulaire de la source peut consister à placer des moyens optiques, comme par exemple une lentille convergente, entre ladite source lumineuse étudiée et le dispositif interférométrique. Cette alternative n'est évidemment pas souhaitable lorsqu'on souhaite miniaturiser le dispositif.

Les dispositifs interférométriques à deux ondes précédents permettent d'obtenir une figure d'interférence d'une source lumineuse. En effet, à partir de la mesure des franges de cette figure, il est possible de calculer le spectre de la source. Ce type de dispositif, connu et couramment appelé « spectromètre à transformée de Fourier statique », fonctionne selon le principe suivant.

Un spectromètre statique à transformée de Fourier comporte une cavité optique dont les faces internes sont globalement inclinées l'une par rapport à l'autre, de manière à offrir à une onde incidente un dégradé de hauteurs de cavité. Chaque hauteur correspond à un $\Delta\phi$ entre un faisceau FB transmis sans réflexion et un faisceau FA transmis après une réflexion sur la deuxième face, puis la première face de la couche déphasante, ce $\Delta\phi$ conduisant à un contraste de frange optimal pour une fréquence associée et ses sous-multiples.

Pour calculer un spectre, il est nécessaire d'obtenir un interférogramme composé d'un nombre suffisant d'état d'interférence ou de teintes plates d'intensités différentes.

Or, pour permettre l'observation d'un interférogramme, la distance h entre les faces internes d'une cavité partiellement résonante doit varier dans une certaine gamme de valeurs, délimitée par une valeur minimale $h_{min}$ et une valeur maximale $h_{max}$. Cette distance h peut varier de manière régulière selon un pas égale à « dn ». De ces valeurs dépendent la gamme spectrale $[\lambda_{min}, \lambda_{max}]$ que l'on peut étudier et la résolution $d\lambda$ de cette gamme. Les relations entre ces valeurs sont rappelées ci-après et figurent également dans le document EP 1 482 288 A1.

La distance h introduit une différence de marche $\delta$ entre une première et une deuxième onde lumineuse traversant ladite cavité en incidence normale. Contrairement à la première onde, la deuxième onde est réfléchie au moins une fois sur les faces internes de la cavité partiellement résonante. La différence de marche $\delta$ est donnée par la formule suivante :

$$\delta = 2n_0h \ (1)$$

où, $n_0$ est l'indice optique du milieu séparant les faces internes de la cavité.

La longueur d'onde minimale détectable, $\lambda_{min}$, est liée au pas d'échantillonnage $d\delta = 2n_0dh$ de l'interférogramme, par la formule :

$$\lambda_{min} = 2d\delta = 4n_0dh \ (2)$$

La borne supérieure $\lambda_{max}$ est définie, en pratique, par la sensibilité du détecteur qui devient aveugle au-delà de cette valeur.

La résolution spectrale $d\lambda$ du dispositif interférométrique pour l'analyse d'une longueur d'onde $\lambda$, est liée à la différence de marche maximale $\delta_{max}$, créée par l'interféromètre entre la première et la deuxième onde (c'est-à-dire à l'endroit où la distance h est maximale). La résolution spectrale est définie par :

$$d\lambda = \lambda^2/(2\delta_{max}) = \lambda^2/(4n_0h_{max}) \ (3)$$

Pour atteindre une résolution fine, correspondant à un faible $d\lambda$, la cavité doit présenter une épaisseur $h_{max}$ importante. Hormis au niveau de la cavité où $h = h_{max}$, la résolution spectrale est ici indépendante de la distance h séparant les faces internes de la cavité partiellement résonante, contrairement aux cavités résonantes où la résolution spectrale associée à une zone de cavité de hauteur h est fonction de la précision sur h. Par exemple, lorsque les faces internes de la cavité partiellement résonante sont séparées par de l'air ($n_0 = 1$), la distance maximale $h_{max}$ doit être égale à 500 $\mu$m pour $\lambda = 10$ $\mu$m, si on veut atteindre une résolution $d\lambda$ de 0.050 $\mu$m.

Pour miniaturiser ce type de dispositifs spectrométrique, une première solution consiste à l'intégrer directement dans la structure d'un dispositif de détection optique (FR2855608, US20080285165). Cependant, des limitations technologiques apparaissent lorsque l'on souhaite mettre en forme la cavité partiellement résonante. En effet, les outils de micro-usinage habituellement utilisés ne peuvent plus l'être dans le cas d'une intégration, car ils risqueraient d'endommager l'environnement du détecteur optique. De ce fait, les techniques et donc les possibilités de mise en forme des faces de la cavité optique sont limitées. Par exemple, lorsque les faces internes d'une cavité semi-résonante ne sont pas parallèles entre-elles, la valeur de l'angle séparant ces deux faces ne peut pas dépasser certaines valeurs (typiquement 10 mrad).

Un autre inconvénient concernant ce type de dispositif est sa sensibilité aux cycles thermiques, en raison des différents coefficients de dilatation thermiques, entre les matériaux le constituant et le dispositif de détection optique.

Enfin, comme pour le dispositif interférométrique à ondes multiples, les dispositifs interférométriques à deux ondes de l'état de l'art sont peu robustes à la taille angulaire de la source observée.

L'invention a pour objectif un dispositif interférométrique à deux ondes, apportant une solution aux inconvénients précédents. La présente invention a donc pour objectif de proposer un dispositif interférométrique à deux ondes :

- robuste à la taille angulaire de la source observée ;
- de préférence robuste lors de sa fabrication ;
- robuste lors de sa manipulation et de son utilisation ;
- robuste aux cycles thermiques ;
- de dimensions pouvant être réduites ;
- adapté à une production en grande quantité, de type industrielle.

L'objectif de la présente demande est également de proposer un spectromètre statique à transformée de Fourier extra-plat, comportant un dispositif interférométrique selon l'invention, placé entre une source lumineuse étudiée et un dispositif de détection optique.

**EXPOSÉ DE L'INVENTION**

L'invention concerne un spectromètre à transformée de Fourier à deux ondes selon la revendication 1.

De préférence, le premier matériau peut être non déformable. Le terme déformable peut désigner un matériau pouvant se déformer de façon élastique, comme par exemple un élastomère. Un matériau non-déformable peut par exemple être du quartz, ou de la silice, ou du silicium, ou du germanium ou un autre cristal de type ZnSe, ou $CaF_2$, ou ZnS, ou $MgF_2$, ou KBr. Le second matériau peut également être non déformable.

Le premier et le second matériaux peuvent être avantageusement non déformables de sorte à être suffisamment résistants pour être manipulés et utilisés sans être endommagés et/ou que la géométrie du dispositif interférométrique à deux ondes ne soit modifiée.

Le premier et le second matériau sont transparents à au moins une longueur d'onde de la source lumineuse (S).

Le dispositif selon l'invention est indépendant de tout détecteur photosensible. De ce fait, le dispositif est robuste aux cycles thermiques puisqu'il n'y a plus le problème des coefficients de dilatation thermique différents entre le présent dispositif et le détecteur optique.

L'avantage d'avoir un dispositif interférométrique non constitué de miroirs mais de lames monolithiques jointives, le rend plus robuste aux chocs et aux vibrations.

Les franges d'interférence obtenues par une cavité pleine sont plus robustes à la taille angulaire de la source observée que celles obtenues par une cavité non pleine, du fait de la compression de l'angle de champ par l'indice optique de la cavité pleine.

Un autre avantage d'une cavité pleine par rapport à une cavité vide réside dans le fait que pour les mêmes caractéristiques de filtrage interférentiel, les dimensions d'un dispositif comportant une cavité pleine sont plus petites par rapport à un dispositif comportant une cavité vide.

Le premier et le deuxième matériau peuvent être homogènes et transparents à au moins une longueur d'onde de la source lumineuse observée.

La couche de support, comme son nom l'indique, peut servir de couche de support ou de couche de maintien de la couche déphasante contre un plan, sans qu'aucune face de la couche déphasante ne soit en contact avec ledit plan. Autrement dit, la couche de support peut maintenir la couche déphasante sur ce plan.

La couche déphasante forme au moins une cavité pleine partiellement résonante, délimitée par un premier dioptre comprenant la première face de la couche déphasante, et par un deuxième dioptre comprenant la deuxième face de la couche déphasante et/ou la deuxième face de la couche de support.

L'indice optique $n_E$ de l'environnement dans lequel se trouve la lame interférométrique monolithique est différent de l'indice optique $n_A$, de sorte que le premier dioptre soit semi-réfléchissant dans une plage de longueurs d'onde que l'on souhaite étudier. Dans cette plage de longueurs d'onde, le coefficient de réflexion du premier dioptre peut être compris entre 70 % et 20 %, de préférence entre 60 % et 40 %.

La valeur de l'indice optique $n_A$ de la couche déphasante est différente de la valeur de l'indice optique $n_B$ de la couche de support, de sorte que le deuxième dioptre forme un dioptre semi-réfléchissant dans la plage de longueurs d'onde étudiée. Dans cette plage de valeurs, le coefficient de réflexion du deuxième dioptre peut être compris dans la même plage de valeurs indiquée pour le premier dioptre.

Le premier et le deuxième dioptre sont donc deux dioptres pouvant réfléchir au moins partiellement une onde incidente, comprise dans la plage de longueurs d'onde étudiée. Ils forment au moins une cavité pleine partiellement résonnante au niveau de la couche déphasante.

Eventuellement, le premier et/ou le deuxième dioptre peut être traité ou bien comporter une couche supplémentaire, par exemple une couche métallique fine, afin de modifier son coefficient de réflexion. Une couche semi-réfléchissante ou réfléchissante peut donc recouvrir la première face et/ou la deuxième face de la couche déphasante.

Eventuellement, au moins une des faces externes du dispositif est recouverte par un matériau antireflet. Autrement dit, la première face de la couche de support et/ou de la couche déphasante peut être traité antireflet. De préférence, au moins la surface du dioptre formée par la couche de support et son environnement est traitée antireflet.

Le coefficient de réflexion moyen R d'au moins une cavité pleine précédente est inférieur à 70 %. De préférence, ce coefficient de réflexion moyen est inférieur à 50 %.

Le coefficient de réflexion de la première face de la couche de support peut être inférieur à 10 %, de préférence inférieure à 5 %.

L'indice optique $n_A$ de la couche déphasante peut être supérieur à l'indice optique $n_B$ de la couche de support. La valeur de ces indices peut être comprise entre 1,3 et 4, de préférence entre 2,5 et 4 pour l'indice optique $n_A$, et entre 1,3 et 2,4 pour l'indice optique $n_B$. Les indices optiques de ces matériaux sont choisis pour qu'ils soient au moins partiellement transparents dans la plage de longueurs d'onde étudiée.

La couche de support et éventuellement la couche déphasante, peuvent être résistantes aux chocs, aux vibrations et aux cycles thermiques, lors de leur manipulation et de leur utilisation.

De préférence, le premier et le deuxième matériau ont un coefficient de dilatation thermique similaire ou proche, afin de minimiser les contraintes entres ces couches lorsque le milieu environnant varie en température.

Selon une première variante préférée d'un des dispositifs précédents, le premier dioptre peut être de surface plane. La première face et la deuxième face de la couche déphasante forment alors un angle $\theta$, dont la valeur peut être comprise entre 10 et 30 mrad ou entre 15 et 25 mrad. La valeur de l'angle $\theta$ peut dépendre des caractéristiques du détecteur utilisé et des spécifications de la mesure (gamme spectrale et résolution).

Selon une deuxième variante préférée d'un des dispositifs précédents, le premier dioptre comporte des éléments de surface ou des marches, qui sont parallèles au deuxième dioptre. La couche déphasante a alors un profil en marches d'escalier ou en pyramide, selon au moins un plan perpendiculaire au deuxième dioptre. Ces marches sont séparées par des contremarches qui sont de préférence perpendiculaires au deuxième dioptre.

Chaque marche peut alors former avec le deuxième dioptre, une cavité pleine partiellement résonante dans laquelle se superposent un faisceau lumineux incident et un faisceau lumineux réfléchi. De préférence, le faisceau lumineux réfléchi se réfléchit une fois au niveau du premier dioptre, avant d'interférer de façon significative avec un faisceau lumineux non réfléchi. Deux faisceaux interfèrent de façon significative lorsqu'ils produisent un interférogramme de contraste supérieur à 10 % du niveau moyen détecté.

La lame interférométrique monolithique forme un système interférométrique à deux ondes lorsqu'elle est interposée entre une source lumineuse et un plan de détection optique. Elle peut ainsi permettre la formation d'une figure d'interférence de la source lumineuse sur le plan de détection optique.

Le plan de détection optique peut être placé ou présent, à proximité du plan de localisation, de préférence dans ce plan. Pour cela, des moyens peuvent être placés entre la source lumineuse et la lame interférométrique et/ou entre la lame interférométrique et le plan de détection optique, pour faire ou aptes à faire coïncider la figure d'interférence de la source lumineuse avec le plan de détection optique.

Ces moyens peuvent être des moyens mécaniques, comme par exemple une cale, et/ou des moyens optiques, à base de lentilles ou de miroirs.

Une cale ou entretoise peut être présente entre le plan de détection optique et le premier dioptre.

Selon une alternative, la cale peut être placée entre le plan de détection optique et la première face de la couche de support.

Une cale peut également être placée entre le dispositif de détection optique et un plan sur lequel repose ledit dispositif de détection.

Une ou plusieurs cales peuvent être positionnées selon les alternatives précédentes.

Le plan de détection peut par exemple être un plan ou un dispositif photosensible, permettant de visualiser et/ou d'effectuer des mesures de la figure d'interférence, comme par exemple de mesurer ces interfranges. Ces moyens peuvent comporter ou être associés à des moyens de traitement des mesures pour calculer le spectre de fréquences de la source lumineuse. Ce système peut former un spectromètre statique par transformée de Fourier.

La première face de la couche de support peut être disposée entre le plan de détection et la seconde face de la couche support, ou bien la première face de la couche déphasante peut être disposée entre le plan de détection et la seconde face de la couche déphasante.

L'invention concerne également l'utilisation d'un dispositif ou d'un système précédent, la lame interférométrique pouvant être placée dans un environnement d'indice optique $n_E$ inférieur à l'indice optique $n_A$ de la couche déphasante. Ainsi, la première face de la couche déphasante peut former un premier dioptre semi-réfléchissant, pouvant réfléchir partiellement un faisceau lumineux incident.

La lame interférométrique peut être choisie en fonction de la valeur de l'indice optique $n_A$ de la couche déphasante, dans le but que les faisceaux lumineux issus de la source observée, forment une figure d'interférence exploitable après avoir parcouru la plus petite distance dans la couche déphasante. Autrement dit, pour une même distance géométrique parcourue par un faisceau lumineux, la valeur du chemin optique du faisceau lumineux dans la couche déphasante peut être amplifiée d'un facteur correspondant à l'indice $n_A$ de la couche déphasante de sorte à être supérieure, voire très supérieure à la valeur du chemin optique du même faisceau lumineux dans la couche de support et/ou dans l'environnement. Le facteur d'amplification $n_A$ étant typiquement compris entre 1,5 et 4.

L'indice optique $n_A$ de la couche déphasante peut être choisi de sorte qu'un faisceau lumineux traversant la couche déphasante, parcours une distance géométrique minimum pour une valeur du chemin optique souhaitée du faisceau dans la couche déphasante. C'est-à-dire, la valeur de l'indice optique de la couche déphasante peut être choisie pour améliorer la compacité du dispositif interférométrique. Un indice optique élevé permet de diminuer favorablement l'épaisseur de la couche déphasante traversée par les faisceaux lumineux, afin que la lame interférométrique soit avantageusement extra-plate ou la plus compacte possible.

La présente invention concerne également un procédé de fabrication d'un spectromètre à transformée de Fourier à deux ondes selon la revendication 13.

L'étape d'évidement ou de retrait peut être réalisée par découpe et/ou polissage mécanique et/ou par gravure chimique.

Une étape de traitement d'au moins une face de la première partie et/ou de la deuxième partie peut être réalisée avant ou après leur assemblage pour former la lame interférométrique.

L'étape de traitement peut être une étape de polissage ou de recouvrement par une autre couche réfléchissante de sorte que le coefficient de réflexion de la face traitée soit modifié selon les valeurs précédentes.

Les étapes précédentes de fabrication peuvent permettre la mise en forme de la lame interférométrique, de sorte que cette lame interférométrique soit identique ou sensiblement identique à une lame interférométrique à deux ondes monolithique telle que décrit ci-dessus.

Il est à noter que les wafers bicouches du commerce peuvent être utilisés pour fabriquer des lames interférométriques selon l'invention. Un usinage selon un plan incliné d'une face du wafer permet un usinage en parallèle de plusieurs lames interférométriques, sans risque d'endommagement. De plus, l'usinage est un procédé classique du secteur de la micro-électronique et plus particulièrement la fabrication de capteurs optiques.

L'ensemble de ces gains de productivité, de coût et de robustesse (taille angulaire de la source, résistance aux chocs, aux variations thermiques, précision d'usinage), de compacité et de contraste (guidage optique du coin de matière) n'était pas envisageable par l'homme du métier cherchant à augmenter la robustesse de la taille angulaire, sans utiliser de lentille convergente entre la source et le dispositif interférométrique.

## BRÈVE DESCRIPTION DES DESSINS

D'autres détails et caractéristiques de l'invention apparaîtront de la description qui va suivre, faite en regard des figures annexées suivantes. Les parties identiques, similaires ou équivalentes des différentes figures portent les mêmes références de façon à faciliter le passage d'une figure à une autre. Les différentes parties représentées sur les figures ne le sont pas nécessairement selon une échelle uniforme, pour rendre les figures plus lisibles. Les repères indiqués sur les figures sont orthogonaux.

La figure 1 représente la courbe de transmission d'une cavité résonante de finesse 200 (R=99 %).

La figure 2 représente l'évolution de la finesse F d'une cavité, en fonction du coefficient de réflexion moyen R de ces deux faces.

La figure 3 représente la courbe de transmission d'une cavité résonante de finesse 10 (R=72 %).

La figure 4 représente la courbe de transmission d'une cavité partiellement résonante de finesse 1,1 (R=10 %).

La figure 5 représente une vue de profil d'une première lame interférométrique à deux ondes, de type marches d'escalier.

La figure 6 représente une vue de profil d'une lame interférométrique de la figure 5, traversée par des faisceaux lumineux issus d'une même source.

Les figures 7A et 7B représentent deux configurations d'un spectromètre statique à transformée de Fourier, comportant une lame interférométrique selon la figure 5.

La figure 8 représente une vue de profil d'une deuxième lame interférométrique à deux ondes, de type coin de matière.

La figure 9 représente une vue de profil d'une lame interférométrique de la figure 8, traversé par des faisceaux lumineux issus d'une même source.

Les figures 10A et 10B représentent deux configurations d'un spectromètre statique à transformée de Fourier, comportant un dispositif interférométrique selon la figure 8.

Les figures 11A à 11D représentent un procédé de réalisation d'une marche d'un dispositif interférométrique à deux ondes selon la figure 5.

## EXPOSÉ DÉTAILLÉ DE MODES DE RÉALISATION PARTICULIERS

La présente demande concerne un dispositif interférométrique à deux ondes ou à deux ondes majoritaires, permettant de réaliser un interférogramme d'une source lumineuse l'éclairant. Le dispositif comporte une première et une deuxième couche maintenues ensemble.

La première couche comporte une première face A1 en vis-à-vis et non parallèle à une deuxième face A2 de surface plane, de préférence. La face A1 forme donc un premier dioptre et la face A2 un deuxième dioptre, délimitant au moins une cavité pleine au niveau de la première couche.

Les coefficients de réflexion des faces A1 et A2 peuvent être compris entre 5 % et 90 %, de sorte que la cavité pleine au niveau de la première couche soit partiellement résonante, avec un coefficient de réflexion moyen R inférieur à 70 %, par exemple égale à 50 %.

La face A1 et/ou A2 peut éventuellement être recouverte par une couche aux propriétés réfléchissantes, afin d'augmenter respectivement le coefficient de réflexion du premier et/ou du deuxième dioptre précédent.

La première couche est également nommée couche déphasante A, car le premier et/ou le deuxième dioptre permet de séparer un faisceau lumineux incident en un faisceau lumineux transmis et réfléchi.

Par exemple, pour atteindre une résolution d$\lambda$ de 0,05 $\mu$m à une longueur d'onde $\lambda$=10 $\mu$m, la couche déphasante est prismatique avec une épaisseur maximale $h_{max}$ de 500 $\mu$m en bord. En prenant une lame de Germanium, d'indice $n_A$=4, on obtient une épaisseur maximale de couche de 125 $\mu$m. Par ailleurs, la surface de cette couche déphasante correspond à la taille du détecteur matriciel utilisé, typiquement 10 mm$^2$

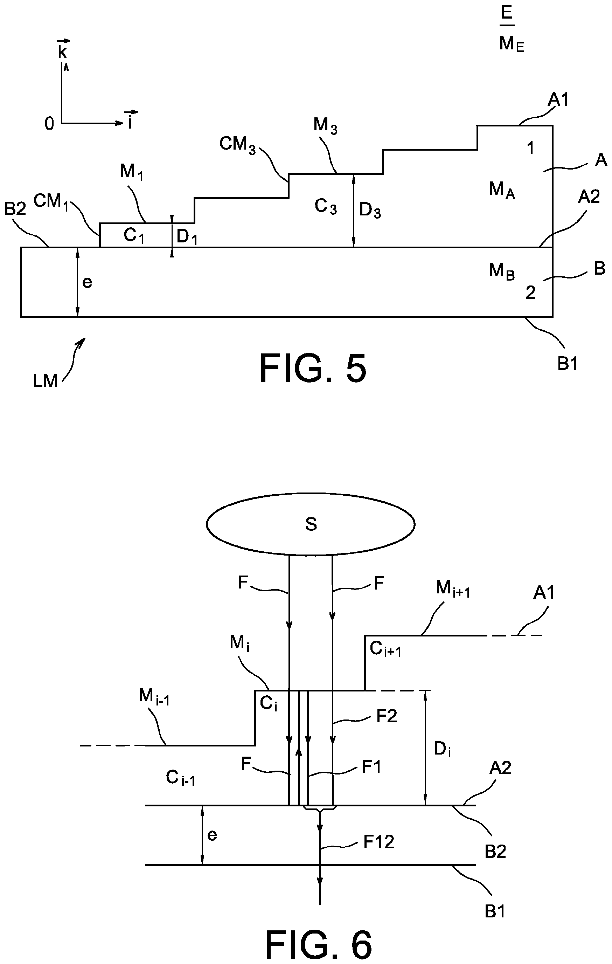

La deuxième couche est appelée couche de support B, car elle permet de supporter ou bien de maintenir la couche déphasante A (figure 5). La couche de support comporte une première face B1 en vis-à-vis d'une deuxième face B2.

La deuxième face B2 est de préférence plane pour permettre un meilleur maintien de la deuxième face A2.

La surface de la première face B1 est avantageusement adaptée à la surface d'un plan sur lequel la couche de support peut reposer ou être maintenue. La première face B1 peut permettre de stabiliser la couche de support sur ce plan, elle peut par exemple être de surface plane. Des plots, des gorges ou bien des chanfreins peuvent être disposés entre la face B1 et le plan, pour assurer ou renforcer leur assemblage.

La distance e, séparant les faces B1 et B2, peut être comprise entre quelques centaines de micromètres et plusieurs millimètres, ou bien correspondre aux épaisseurs de wafer couramment utilisées dans l'industrie des semi-conducteurs. La distance e peut être comprise entre 400 $\mu$m et 1 mm.

Avantageusement, la face B1 peut être traitée par un procédé antireflet afin que son coefficient de réflexion, dans la gamme de longueurs d'onde étudiée, soit inférieur à 10 % ou 5 %.

La deuxième face B2 peut éventuellement faire partie du deuxième dioptre et être traitée, pour que le coefficient de réflexion dudit dioptre puisse être compris entre 30 et 50 %, dans la gamme de longueurs d'onde étudiée.

La couche déphasante A et la couche de support B sont réalisées respectivement dans un premier matériau 1 et un deuxième matériau 2. Ces matériaux sont de préférence transparents dans la gamme spectrale étudiée et suffisamment résistants pour être manipulés et utilisés sans être endommagés. Ces matériaux peuvent être réalisés à partir de matériaux organiques (polyéthylène), ou inorganiques (verres, cristaux).

Selon l'invention, la deuxième face A2 et la deuxième face B2 sont solidaires ou jointes ensemble, de façon à former une lame interférométrique monolithique LM (figure 5). Le premier et le deuxième matériau ont avantageusement des coefficients de dilatation thermique identiques ou proches, pour limiter lorsque leur température varie des contraintes au niveau de leur interface.

La couche déphasante A et la couche de support B peuvent être maintenues ensemble par l'intermédiaire d'une couche de maintien non représentée sur les figures. Cette couche de maintien est avantageusement transparente pour permettre le passage, d'une couche à une autre, d'un faisceau lumineux provenant d'une source étudiée. Elle peut être placée sur les surfaces périphériques de la face A2 et/ou B2, pour ne pas gêner la transmission du faisceau lumineux. Cette couche de maintien peut être une couche de colle optique, par exemple à base de polymère (NOA061), polymérisable sous UV, ou une couche de colle de silicone ou époxy. Une pièce mécanique en forme d'étau, de barillet ou de bague, peut aussi être utilisée pour maintenir ensemble la première et la deuxième couche.

Ainsi assemblé, le premier dioptre comportant la première face A1 et le deuxième dioptre comportant la deuxième face A2 et/ou la deuxième face B2, délimitent au moins une cavité pleine partiellement résonnante pleine d'un matériau 1. Le coefficient de réflexion moyen R de cette cavité pleine est inférieur à 70 %, de préférence inférieur à 50 %. Autrement dit, la ou les cavités délimitées par le premier et le deuxième dioptre ne sont pas adaptées à faire du filtrage interférentiel.

Le premier et le second matériau sont de préférence non déformables afin de former une lame interférométrique monolithique (LM) de géométrie constante au cours du temps et lors de son utilisation. Autrement dit, on choisit des matériaux qui permettent de garder constant ou sensiblement constant les positions entre les différents dioptres constituant la lame interférométrique.

En d'autres termes, l'objectif de l'invention est de proposer un dispositif interférométrique dont les dimensions géométriques ne varient pas dans le temps, à l'inverse par exemple du dispositif divulgué dans le document US 2008/0186508 A1.

Le premier et le deuxième matériau peuvent être réalisés à partir d'un des matériaux suivants : quartz, silice, silicium, Germanium ou autres cristaux (ZnSe, CaF$_2$, ZnS, MgF$_2$, KBr).

Pour que la première surface A1 et le deuxième dioptre forme au moins une cavité partiellement résonante, l'indice optique $n_A$ de la couche déphasante A et l'indice optique $n_B$ de la couche de support B sont différents. Ils peuvent être compris entre 1.3 et 4, ou de préférence entre 2.5 et 4.

Le coefficient de réflexion du premier dioptre est donné par la formule suivante :

$$R1=(n_E-n_A)^2/(n_E+n_A)^2$$

Par exemple, pour une couche de déphasage en germanium ($n_A$=4), le coefficient R1 vaut 36 %.

Le coefficient de réflexion du deuxième dioptre est donné par la formule suivante :

$$R2=(n_A-n_B)^2/(n_A+n_B)^2$$

L'indice de l'environnement $n_E$ est différent de l'indice optique $n_A$ de la couche déphasante pour que le coefficient de réflexion moyen R de la couche déphasante ne soit pas nul :

$$R = \sqrt{\left(\frac{n_a-n_b}{n_a+n_b}\right)^2 \times \left(\frac{n_a-n_e}{n_a+n_e}\right)^2}$$

Les indices optiques $n_a$ et $n_b$ sont choisis en fonction de l'indice optique de l'environnement $n_e$ dans lequel le dispositif est destiné à fonctionner, de manière à ce que le coefficient de réflexion moyen R de la couche déphasante soit inférieur à 0,7.

Dans le cas d'une couche de support en ZnSe ($n_B$=2,4), le coefficient R2 vaut 6,25 %. On obtient alors une cavité pleine semi-résonante avec un coefficient de réflexion moyen R de 15 %.

Selon une première alternative de l'un des dispositifs précédents, que nous nommerons par la suite dispositif principal, la première face A1 de la couche déphasante A peut comporter des sections ou bien des surfaces $M_i$ (i>0), parallèles ou sensiblement parallèles à la deuxième face A2 (figure 5 et 6). Les surfaces $M_i$ sont éloignées de la face A2 d'une distance $D_i$, différentes entre deux surfaces $M_i$ voisines. Les distances $D_i$ évoluent régulièrement entre 0 et une valeur $D_{max}$ pouvant atteindre 500 $\mu$m, ou bien comprise entre 50 et 150 $\mu$m, ou par exemple égale à 100 $\mu$m. Les distances $D_i$ peuvent être incrémentées par une valeur fixe dm, d'une marche à une autre, de sorte que le profil de la face A1 soit un profil de type « marches d'escalier» dans le plan $[0; \vec{i}; \vec{k}]$(figure 5 et 6). Ainsi, le traitement numérique de l'interférogramme produit par la couche déphasante A pourra être facilité. De préférence, l'angle formé entre les marches $M_i$ et les contremarches $CM_i$, est compris entre 90° et 270°. Avantageusement, les surfaces des marches $M_i$ sont parallèles à la face A2. Les surfaces des marches $M_i$ et la face A2 peuvent délimiter plusieurs cavités pleines réfléchissantes $C_i$. La largeur de transition entre deux marches est avantageusement inférieure à la taille d'un pixel.

Un faisceau ou une onde lumineuse F issue d'une source S, éclairant en incidence normale ou en incidence sensiblement normale, un premier dioptre délimitant une cavité pleine partiellement résonante $C_i$, est partiellement transmis dans la couche déphasante A (figure 6). Le premier dioptre peut être la face A1 (ou bien la face A2 et/ou B2). Lorsque le faisceau transmis arrive sur un deuxième dioptre délimitant ladite cavité pleine $C_i$, une première partie du faisceau est réfléchie en direction du premier dioptre. Le deuxième dioptre peut être la face A2 et/ou B2 (ou bien la face A1). Le faisceau F1 réfléchi sur ce premier dioptre se superpose alors avec un autre faisceau F2 entrant dans la cavité pleine $C_i$. Les faisceaux F1 et F2, issus de la même source lumineuse S, interférent pour former un faisceau F12. La valeur de l'intensité du faisceau F12 peut être supérieure ou bien inférieure à la valeur de l'intensité du faisceau F1 ou F2. Une partie du faisceau F12 traverse la deuxième surface délimitant la cavité pleine $C_i$. Une teinte plate d'un faisceau lumineux F, traversant la cavité pleine $C_i$, peut ainsi être obtenue. Une teinte plate désigne une surface de même couleur et de même intensité, observable avec un dispositif interférométrique de type Michelson.

Au moins un dioptre délimitant la cavité pleine $C_i$ a un coefficient de réflexion inférieur à 90 %, afin que l'intensité d'un faisceau, présent dans la cavité, chute de façon significative lorsqu'il est réfléchi sur cette face. Par conséquent, un faisceau lumineux se réfléchissant plus de deux fois sur un dioptre délimitant une cavité pleine $C_i$, n'a plus une intensité suffisante pour interférer de façon significative avec un faisceau lumineux non réfléchi. Les cavités pleines partiellement résonante $C_i$ (avec i>0) ne sont donc pas adaptées à la réalisation d'un filtrage à plusieurs ondes ou d'un filtrage de type interférentiel, car leur valeur de finesse F est de préférence inférieure à 10. Un faisceau lumineux entrant dans une des cavités pleine $C_i$ partiellement résonante interfère donc principalement avec un faisceau lumineux ayant subi deux réflexions sur les dioptres délimitant la cavité $C_i$. Les dispositifs représentés sur les figures 5 et 6 permettent donc de produire des teintes plates en faisant interférer deux faisceaux lumineux temporellement cohérents ou issus d'une même source.

L'intensité d'un faisceau lumineux traversant une cavité pleine $C_i$ dépend donc du phénomène d'interférence se produisant dans cette cavité, entre un faisceau réfléchi F1 et un faisceau non réfléchi F2. L'intensité du faisceau F12 sortant de la cavité pleine, dépend de la valeur du déphasage entre le faisceau F1 et F2 lorsqu'ils se superposent. L'intensité est minimum lorsque cette valeur est égale à un multiple de $\pi/2$, elle est maximum pour une valeur multiple de $\pi$. L'intensité du faisceau F12 dépend donc de la valeur du champ électrique du faisceau lumineux F1 lorsqu'il se réfléchit, par exemple sur la face A1 de la cavité $C_i$. Or, cette valeur dépend du chemin optique parcouru par le rayon F1. La valeur du chemin optique dans la cavité pleine $C_i$ est définie par la relation suivante, pour un faisceau lumineux traversant ladite cavité (sans réflexion) :

$D_i n_A$

Avantageusement, les cavités pleines selon l'invention sont remplies de matière dont l'indice optique $n_A$ peut être choisi. Il est donc possible de modifier la valeur du chemin optique parcouru par un faisceau lumineux traversant une cavité pleine $C_i$ de longueur $D_i$, en modifiant uniquement la valeur de l'indice optique $n_A$ de la couche déphasante (figure 6). L'invention permet de cette façon d'augmenter ou de diminuer la valeur du chemin optique, sans modifier la longueur $D_i$ de la cavité pleine $C_i$. En modifiant la valeur du chemin optique, on modifie la valeur du déphasage entre un faisceau réfléchi et un faisceau non réfléchi dans la cavité pleine. Avantageusement, cela permet de miniaturiser des dispositifs tel que décrit dans le document US 6,016,199, comportant un ensemble de cavités pleines semi-réfléchissantes X juxtaposées et non remplies de matière solide. L'indice optique des cavités pleines semi-réfléchissantes X correspond à l'indice optique de l'environnement en contact avec le dispositif. Or, pour pouvoir calculer le spectre d'un faisceau lumineux traversant ce type de dispositif, il est nécessaire d'observer plusieurs teintes plates d'intensités différentes sur l'interférogramme produit par les cavités X. L'intensité d'une teinte plate dépend de la valeur du déphasage entre les deux faisceaux se superposant. La valeur du déphasage est définie par la relation suivante :

$$\frac{2\pi D_X n_X}{\lambda}$$

avec,

- $D_X$ étant la distance séparant les faces réfléchissantes délimitant la cavité X ;
- $n_X$ étant l'indice optique de l'environnement présent entre les faces de la cavité X ;
- $\lambda$ étant la longueur d'onde du faisceau présent dans la cavité.

Pour observer une première teinte plate et pour des valeurs d'indice optique faibles ou proche de 1, la distance $D_X$ doit être de l'ordre de la longueur d'onde $\lambda$ du faisceau présent dans la cavité X. Cette distance varie de quelques centaines de nanomètres, pour les ondes appartenant au domaine du visible, à plusieurs microns pour les ondes appartenant au domaine de l'infrarouge et de l'infrarouge lointain (voir ci-dessus).

L'invention permet donc de réduire les dimensions des cavités semi-réfléchissantes X en remplissant ces cavités par un matériau d'indice optique choisi, avantageusement supérieur à celui de leur environnement, autrement dit, les cavités sont pleines. Par exemple, dans l'infrarouge lointain, à $\lambda=10\ \mu m$, si on veut atteindre une résolution $d\lambda$ de $0.050\ \mu m$, il suffira que le matériau 1, composant la couche déphasante A, soit du Germanium dont l'indice optique est de l'ordre de 4. L'épaisseur maximale $D_{max}$ des cavités pleines est alors de $125\ \mu m$ au lieu de $500\ \mu m$ pour une cavité X remplie d'air (indice 1) ou bien « vide ». Une cavité pleine selon l'invention est donc n fois moins épaisse qu'une cavité creuse ou vide et nécessite des profondeurs de gravure n fois moins importantes pour sa réalisation.

De ce fait, les teintes plates obtenues par un dispositif comportant des cavités X non remplies, peuvent être obtenues par un dispositif selon l'invention plus compact ($D_i < D_X$), en augmentant la valeur de l'indice optique de la cavité partiellement résonnante ($n_A > n_X$).

L'invention permet donc de miniaturiser et d'optimiser les dimensions des cavités pleines $C_i$, en fonction de la source lumineuse étudiée et de la figure d'interférence que l'on souhaite obtenir. L'invention est d'autant plus avantageuse que la longueur d'onde de la source lumineuse S observée est grande.

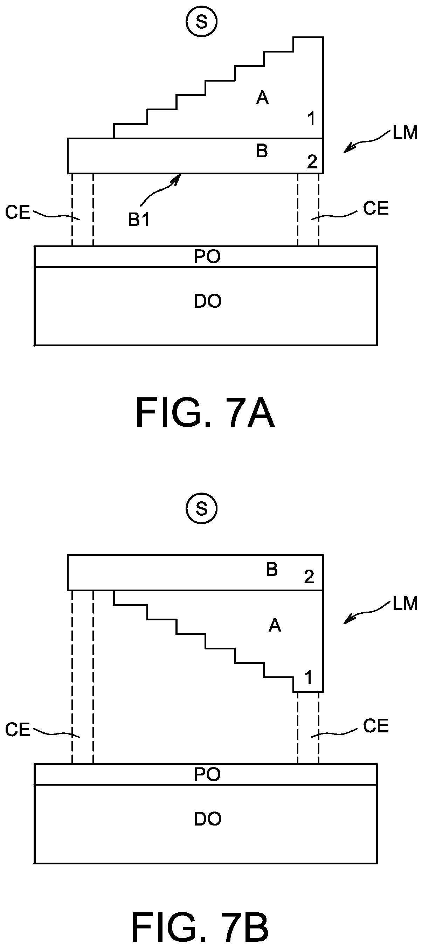

L'un des dispositifs ci-dessus, peut être placé entre la source observée S et un dispositif de détection optique DO, pour former un système interférométrique à deux ondes (figures 7A et 7B). Le dispositif de détection optique peut comporter un plan de détection optique PO, constitué par une matrice de capteurs CCD ou CMOS. La plage de sensibilité du dispositif de détection optique DO peut être comprise entre le domaine du visible et le domaine de l'infrarouge lointain, de préférence entre $0.4\ \mu m$ et $0.8\ \mu m$ pour une utilisation dans le domaine visible, $1\ \mu m$ et $2.5\ \mu m$ pour une utilisation dans le domaine du proche infrarouge, $3\ \mu m$ et $5\ \mu m$ pour une utilisation dans le moyen infrarouge et $8\ \mu m$ et $14\ \mu m$ pour une utilisation dans l'infrarouge lointain. Avantageusement, la surface du détecteur comporte plusieurs cellules ou plusieurs surfaces de détection ou pixels, afin de former un plan de détection optique PO pouvant détecter et mesurer les interfranges d'une figure d'interférence produite par l'un des dispositifs précédents.

La première face de la couche de support B (figure 7A) ou de la couche déphasante A (figure 7B) peut être la face la plus proche ou bien en contact avec le plan de détection optique PO. De préférence, la couche déphasante est en vis-à-vis et à une distance du plan de détection optique permettant la détection et la mesure des interfranges de la figure d'interférence, produite par la lame interférométrique LM. Avantageusement, les surfaces des marches $M_i$ sont parallèles, ou sensiblement parallèles au plan de détection optique, pour s'affranchir des effets de filtrage spatial par les pixels du détecteur multi-éléments. Le profil en marches d'escalier du deuxième support est donc avantageusement adapté aux besoins de spectrométrie « haute résolution » pour des gammes spectrales réduites ou en mode sous-échantillonné.

En mode sous-échantillonné, la contremarche $CM_i$ d'épaisseur $dm_i$, (figure 6) peut être plus grande que $\lambda_{min}/(4n_A)$ (voir équation (2)). Dans ce cas, le spectre de la source à analyser sera sous-échantillonné. Pour garantir une bonne restitution de spectre dans ce cas, il faut s'assurer que celui-ci soit suffisamment étroit pour ne pas subir d'effets de repliements (ou « *aliasing »),* en veillant par exemple à ce que la sensibilité maximum $\lambda_{max}$ du plan de détection optique soit inférieur à $4n_A dm_i$. Cette configuration à l'avantage de relâcher considérablement les tolérances de positionnement du dispositif interférométrique devant le plan de détection optique.

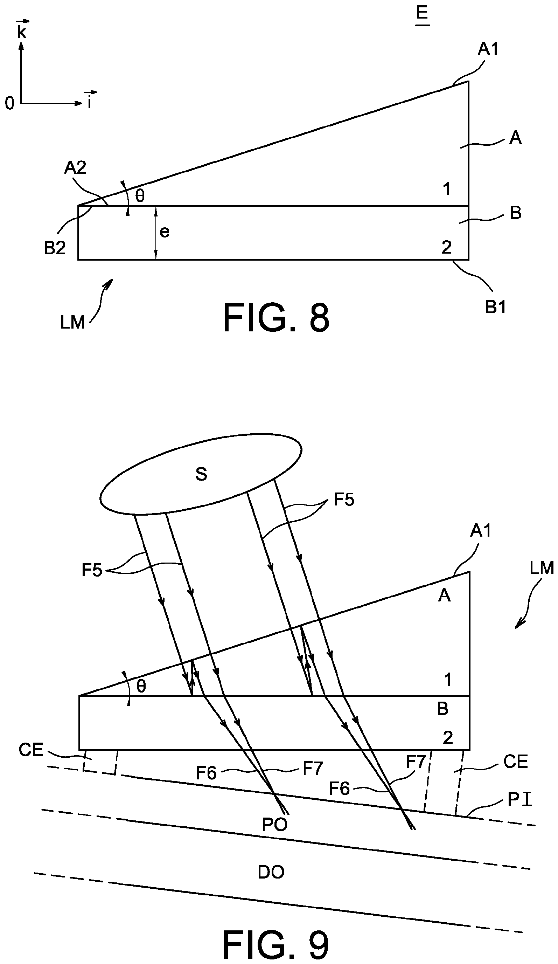

Selon une deuxième alternative d'un dispositif principal ci-dessus, la face A1 est plane (figure 8). Le profil de la couche déphasante A est de type « coin de matière » dans le plan $[0; \vec{i}; \vec{k}]$. L'angle $\theta$ séparant la première face A1 de la deuxième face A2 peut être compris entre 10 et 30 mrad. Une première partie F6 d'un faisceau lumineux F5, incident sur la couche déphasante A, peut la traverser en étant réfléchie sur les deux dioptres délimitant le coin de matière (figure 9). Une deuxième partie F7 du même faisceau lumineux F5 peut traverser la même couche sans être réfléchie sur, le premier dioptre ou face A1, et le deuxième dioptre ou face A2. Ces deux faisceaux (F6 et F7) peuvent alors interférer ensemble après avoir traversé la couche déphasante A. Les faisceaux lumineux qui ont le même angle d'incidence sur la couche déphasante, interfèrent dans un même plan de localisation Pl. L'orientation du plan de localisation par rapport à l'un des dioptres de la couche déphasante, dépend de la valeur de l'angle d'incidence des faisceaux lumineux F5 sur cette couche déphasante A. Ce type de dispositif interférométrique fonctionne de façon optimum lorsque les rayons incidents ont des angles identiques ou sensiblement identiques.

Dans le cas d'une source large angulairement, le contraste des franges d'interférence chute rapidement en dehors de ce plan de localisation. Les angles des faisceaux incidents sur le dispositif doivent alors être corrigés pour que l'interférogramme soit dans un même plan ou sensiblement dans un même plan. Des dispositifs optiques de correction peuvent être placés en amont du dispositif, afin de réduire la plage de valeur des angles incidents des faisceaux lumineux éclairant ledit dispositif (système afocal avec compression de champ). Cette solution nécessite donc des moyens et des réglages supplémentaires pour sa mise en place. Ces moyens supplémentaires augmentent le risque de casse et de mauvais fonctionnement du dispositif. De plus, cette solution est inadaptée pour miniaturiser ce type de dispositif interférométrique à deux ondes.

Avantageusement, un dispositif selon l'invention comporte de la matière 1 entre le premier et deuxième dioptre délimitant une cavité pleine partiellement résonnante C. La matière présente entre ces dioptres, dans le cas présent les faces A1 et A2, peut être choisie en fonction de la valeur de son indice optique $n_A$. L'indice optique de la couche déphasante A est choisi de sorte à être supérieur ou très supérieur à l'indice optique du milieu incident. Le milieu incident est ici le milieu dans lequel se propagent les faisceaux lumineux avant leur passage dans la couche déphasante. En l'occurrence, ce milieu incident peut être la couche de support B ou bien le milieu E entourant la lame interférométrique. Ainsi, l'angle de réfraction d'un faisceau lumineux, passant du milieu incident à la couche déphasante A, est inférieur à son angle d'incidence. A partir de la relation de Snell-Descartes, le passage (ou réfraction) du faisceau dans le milieu déphasant d'indice élevé réalise une compression de champ, en lieu et place d'un système optique compresseur de champ.

Le coin de matière a donc un effet de guide optique plus efficace qu'un coin d'air. Le dispositif selon l'invention permet ainsi de compresser une taille angulaire importante de la source lumineuse S, en diminuant la plage de valeur des angles de réfraction, par rapport à la plage de valeur des angles d'incidence. Autrement dit, les faisceaux lumineux sont focalisés lors de leur passage dans la couche déphasante. La taille angulaire maximale tolérable dans le plan de localisation (au-delà de cette taille tolérable, le contraste maximal chute) est alors multipliée par un facteur $n_A$ par rapport à une cavité creuse ou remplie d'air, ce qui procure à la cavité pleine un gain en étendue de source à analyser.

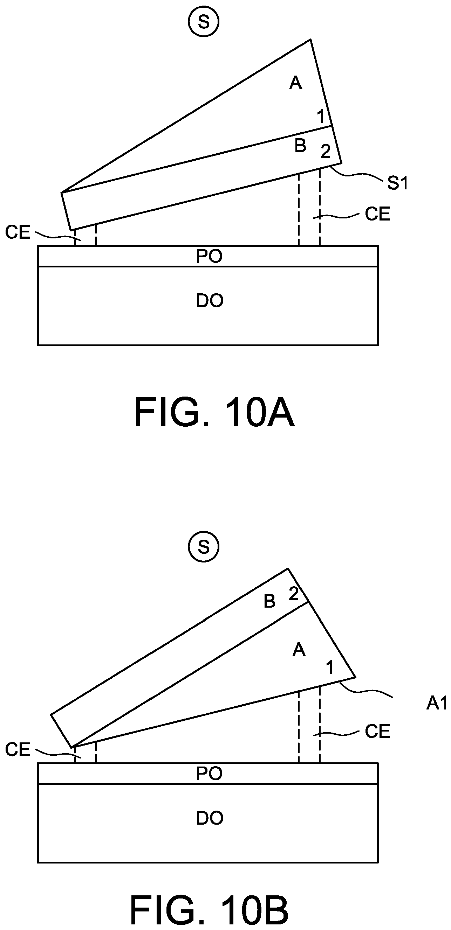

Le dispositif précédent peut être placé devant un plan de détection optique PO d'un dispositif de détection optique DO, similaire ou identique au dispositif décrit ci-dessus, pour former un système interférométrique à deux ondes (figure 10A et 10B). De préférence, l'angle formé entre le plan de détection optique PO et la première ou la deuxième face de la couche déphasante CA, est adapté ou choisi pour que le plan de localisation Pl produit par ladite couche déphasante CA soit confondu ou sensiblement confondu avec le plan de détection optique PO (figure 9). Le calcul permettant de déterminer l'angle formé entre le plan de détection optique PO et la première ou la deuxième face de la couche déphasante CA, permettant d'obtenir un contraste optimal est par exemple défini dans la thèse de doctorat de l'université de Paris Sud soutenue par M. Sylvain Rommeluère, « Intégration d'un microspectromètre statique par transformée de Fourier su un plan focal infrarouge », 2007/PA112056.

La face dudit dispositif la plus proche ou en contact avec le plan de détection optique, peut être la première face B1 de la couche de support B (figure 10A), ou bien la première face A1 de la couche déphasante A (figure 10B).

Une cale ou entretoise CE peut être interposée entre une lame interférométrique LM selon l'invention et le plan de détection optique PO. La cale permet de maintenir en contact ou bien à distance, la lame interférométrique LM et le plan de détection optique PO, de façon à permettre des mesures de la figure d'interférence produite par la lame interférométrique LM. Avantageusement, la cale CE permet de maintenir la lame interférométrique LM selon les positions décrites ci-dessus. La cale peut comporter un ou plusieurs supports, par exemple en SiO ou en verre (BK7), elle peut être micro-usinée. Les bords opposés du support peuvent être en contact permanent ou non permanent, avec la première face A1 de la couche déphasante A, ou la première face B1 de la couche de support B, et le plan de détection optique PO. La cale CE est de préférence en contact avec les surfaces périphériques des surfaces précédentes et éventuellement évidée en son centre, afin de permettre la formation de la figure d'interférence sur le plan de détection optique. Le support peut être rendu solidaire des dispositifs précédents par collage, vissage, clipsage ou autre.

La cale ou entretoise CE peut également séparer et/ou orienter le dispositif de détection optique par rapport à une surface sur laquelle il repose. Cette alternative peut compléter ou remplacer le dispositif de cale précédent. Dans les deux cas, la cale a pour objectif de positionner de façon optimum la lame interférométrique LM par rapport au plan de détection optique PO, pour détecter et éventuellement mesurer les caractéristiques de la figure d'interférence de la source S, produite par la lame interférométrique LM.

Plus généralement, des moyens de maintien peuvent être substitués aux cales ou les compléter, ces moyens étant déformables et/ou modulables, afin que la distance et ou l'angle entre la surface de détection et le dispositif selon l'invention puisse être maîtrisés. Par exemple, les moyens de maintien peuvent permettre de maintenir et/ou de faire pivoter la lame interférométrique par rapport au plan de détection optique.

L'un des dispositifs de détection optique précédents peut comporter des moyens de calcul ou de traitement du signal, permettant de déterminer le spectre d'émission de la source lumineuse observée, à partir des mesures précédentes. Un programme de calcul peut permettre de déterminer à partir de ces mesures, le spectre de fréquence ou de longueur d'onde associé à la source observée S. Le programme de calcul peut comporter des étapes de calcul comprenant des équations de type transformée de Fourier.

Les moyens de calcul peuvent comporter un microprocesseur, des moyens de mémorisation et/ou une carte mémoire, permettant de réaliser le programme de calcul précédent et éventuellement d'enregistrer les résultats.

Le dispositif de détection peut comporter un dispositif d'affichage du signal détecté par le dispositif de détection optique et éventuellement, les résultats du programme de calcul, sous forme de tableau ou de graphique.

La lame interférométrique LM, le plan PO et le dispositif de détection optique DO, ainsi que les moyens de calcul précédents, peuvent former un système de spectromètre statique par transformée de Fourier ou un spectromètre à mesure de cohérence temporelle (figures 7A, 7B, 10A et 10B).

L'invention porte également sur un procédé de fabrication de l'un des dispositifs précédents, à partir d'un premier matériau 1 et d'un deuxième matériau 2. Le premier et le deuxième matériau sont de préférence non déformables afin que le dispositif puisse conserver ses propriétés géométriques lors de son utilisation. Autrement dit, on choisit des matériaux qui permettent de garder constant ou sensiblement constant les positions entre les différents dioptres constituant l'invention.

En d'autres termes, l'objectif de l'invention est de proposer un dispositif dont les dimensions géométriques ne varient pas, à l'inverse par exemple du dispositif divulgué par le document US 2008/0186508 A1.

Le premier et le deuxième matériau peuvent être réalisés à partir d'un des matériaux suivants : quartz, silice, silicium, Germanium ou autres cristaux (ZnSe, $CaF_2$, ZnS, $MgF_2$, KBr).

Une première étape peut consister à joindre le premier et le deuxième matériau ensemble. Les matériaux peuvent être assemblés de façon permanente par adhérence moléculaire ou collage. Selon une alternative, les deux matériaux peuvent être maintenus ensembles par une couche intermédiaire CI de type colle, ou par dépôt d'une couche d'accrochage favorisant l'adhérence moléculaire des deux matériaux.

Selon une deuxième étape, le premier et deuxième matériau peuvent être mis en forme pour être identique à une lame interférométrique monolithique LM comme décrit ci-dessus. Avantageusement, le deuxième matériau peut servir de couche de support au premier matériau. La couche de support peut ainsi permettre de manipuler la couche déphasante lors de sa mise en forme.

La mise en forme peut être réalisée par des techniques de découpage, de polissage mécanique, de gravure chimique, de gravure sèche, de micro-fraisage ou micro-photolithographie.

L'un des procédés précédents peut comporter une étape de traitement d'une des faces du premier et/ou du deuxième matériau, avant ou après leur assemblage, pour que leurs coefficients de réflexion correspondent aux gammes de valeurs recherchées mentionnées plus haut. Un traitement des faces peut consister à déposer une couche de matériau réfléchissant sur une ou plusieurs faces, comme par exemple une couche d'argent sur la face externe de la couche déphasante. Le dépôt de la couche de matériau réfléchissant peut être réalisé par l'une des techniques suivante : «dip-coating », dépôt par évaporation ou autre.

Le coefficient de réflexion des faces peut également être modifié par un traitement mécanique de type polissage, pour être polies avec une rugosité optique inférieure à la longueur d'onde $\lambda$, de préférence inférieure à un dixième de la longueur d'onde, ou inférieur à 1 $\mu$m.

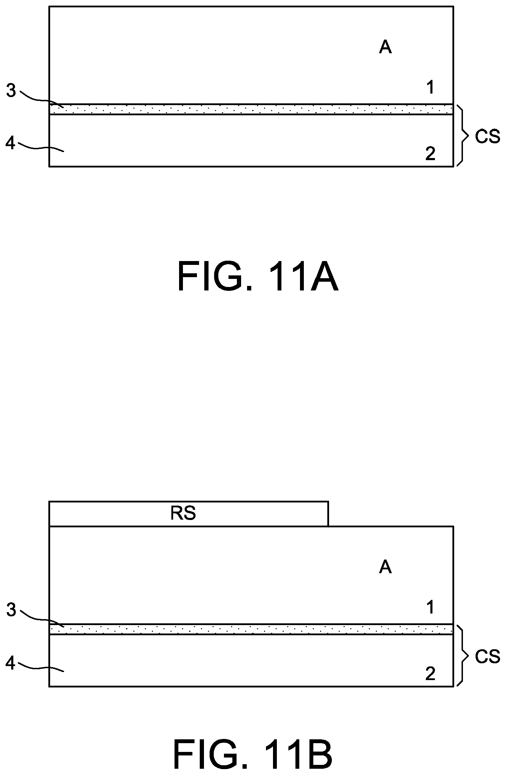

Selon un procédé de réalisation préféré d'une lame interférométrique LM selon l'invention, une lame composite est réalisée en collant ou bien en formant par une technique de croissance par épitaxie en phase liquide ou par jet moléculaire, une première couche en un premier matériau 1 sur une deuxième couche en un deuxième matériau 2. L'épaisseur de la première couche peut être comprise entre 50 et 150 $\mu$m typiquement. La deuxième couche peut comporter une couche de silicium 4 recouverte par une couche de silice 3 (figure 11A).

Selon une deuxième étape, une couche de résine photosensible RS est déposée sur la première couche, elle est ensuite insolée par une source lumineuse passant à travers un masque, puis développée par une technique classique de photolithographie. Le masque permet de délimiter la surface de la couche de résine RS que l'on souhaite exposer.

La partie insolée de la couche RS est retirée chimiquement après immersion dans un premier bain (figure 11B).

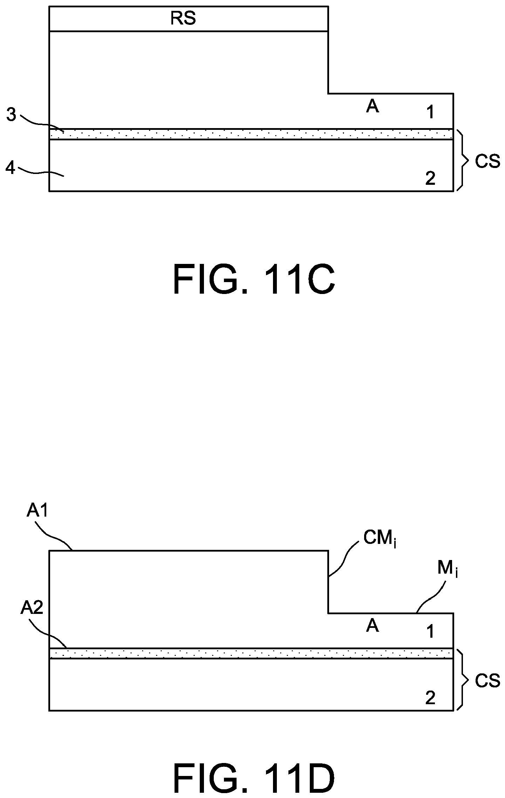

Dans un deuxième bain, la surface de la première couche non protégée par la couche de résine RS est gravée par attaque chimique, la profondeur de la gravure dépendant du temps d'immersion de la lame composite dans le deuxième bain. Il est ainsi possible de contrôler la profondeur de la gravure dans la première couche (figure 11C).

La couche de résine RS restante est dissoute (figure 11D). De cette façon, on obtient une marche $M_i$ et $M_{i+1}$, séparées par une contre marche $CM_i$.

En reproduisant les étapes précédentes à partir de la deuxième étape, il est possible de former plusieurs marches $M_i$ (i>2) sur la première couche. La hauteur et la surface des marches $M_i$ sont maîtrisées lors des différentes étapes du procédé. Ainsi, il est possible de former une lame composite selon les caractéristique d'une des lames interférométriques LM précédentes (figures 5, 7A et 7B).

Selon une alternative à la deuxième étape précédente, la première couche peut être mise en forme par des étapes de polissage mécanique.

Les procédés précédents de fabrication des lames interférométriques LM sont réalisés indépendamment d'un dispositif de détection optique DO. De ce fait, aucune précaution particulière n'est nécessaire vis-à-vis du dispositif de détection optique lors des étapes de réalisation précédentes. Ainsi, plusieurs techniques de fabrication différentes peuvent être employées. La couche de support et la couche déphasante peuvent être mises en forme après être jointe ensemble. Il est ainsi possible d'utiliser des matériaux et des techniques de fabrication courantes, notamment dans le domaine de la microélectronique, pour produire en grande quantité l'un des dispositifs interférométriques précédents.

L'un des procédés précédents peut comporter une étape supplémentaire consistant à maintenir une lame interférométrique LM, en contact ou bien à proximité d'un plan de détection d'un dispositif optique DO, pour former un spectromètre statique par transformée de Fourier (figures 3A, 3B, 6A et 6B). La lame interférométrique et le plan de détection optique peuvent être rendu solidaire par l'intermédiaire d'une cale ou entretoise CE décrite dans la présente demande. La face la plus proche ou en contact avec le plan de détection optique peut être la première face B1 de la couche de support, ou bien la première face A1 de la couche déphasante.

## Revendications

1. Spectromètre statique à transformée de Fourier extra-plat à deux ondes comprenant un plan de détection optique (PO) et un dispositif placé entre une source lumineuse (S) et ledit plan de détection optique (PO), ledit dispositif permettant d'obtenir, un plan de localisation (PI) d'une figure d'interférence de la source lumineuse (S), dont la lumière traverse le dispositif, coïncidant avec le plan de détection optique (PO), ledit dispositif étant **caractérisé en ce qu'**il comporte :

   - une unique couche déphasante (A) en un premier matériau (1) d'indice optique $n_A$, transparente à au moins une longueur d'onde de la source lumineuse (S), la couche déphasante comportant une première face (A1) et une deuxième face (A2) en vis-à-vis, ladite première face (A1) comportant au moins un élément ou une surface non parallèle à ladite deuxième face (A2) ;
   - une couche de support (B) en un deuxième matériau (2), d'indice optique nB différent de l'indice optique nA, transparente à au moins une longueur d'onde de la source lumineuse (S), la couche de support comportant une première face (B1) en vis-à-vis et parallèle à une deuxième face (B2) ;
   - la deuxième face (A2) de la couche déphasante (A) et la deuxième face (B2) de la couche de support (B) étant jointes par adhésion moléculaire ou par collage ou par l'intermédiaire d'une couche de maintien ou par le biais d'une pièce mécanique, de façon à former une lame interférométrique monolithique (LM), l'angle formé entre le plan de détection optique (PO) et la première (A1) ou la deuxième (A2) face de la couche déphasante (A) étant adaptable, en fonction de l'angle d'incidence du faisceau lumineux sur ladite face (A1, A2), pour que le plan de localisation (PI) soit confondu avec ledit plan de détection optique (PO), afin de maximiser le contraste, la couche déphasante formant au moins une cavité pleine partiellement résonante (C, Ci) délimitée par un premier dioptre comprenant la première face (A1) de la couche déphasante (A) et par un deuxième dioptre comprenant la deuxième face (A2) de la couche déphasante et/ou la deuxième face (B2) de la couche de support (B), le coefficient de réflexion moyen R de la cavité pleine partiellement résonante (C, Ci) étant inférieur à 70 %, ou de préférence inférieur à 50 %,

le spectromètre comprenant en outre des moyens de maintien entre ladite lame et le plan de détection, les moyens de maintien étant configurés de manière à pouvoir faire pivoter la lame par rapport au plan de détection optique.

2. Spectromètre selon l'une des revendications précédentes, le coefficient de réflexion de la première face (B1) de la couche de support étant inférieur à 10% ou 5 %.

3. Spectromètre selon l'une des revendications précédentes, l'indice optique $n_A$ étant supérieur à l'indice optique $n_B$.

4. Spectromètre selon l'une des revendications précédentes, l'indice optique $n_A$ étant compris entre 1.3 et 4, de préférence entre 2.5 et 4 ; l'indice optique $n_B$ étant compris entre 1.3 et 4, de préférence entre 1.3 et 2.4.

5. Spectromètre selon l'une des revendications précédentes, une couche semi-réfléchissante recouvrant la première face (A1) et/ou la deuxième face (A2) de la couche déphasante (A).

6. Spectromètre selon l'une des revendications précédentes, la première face (A1) de la couche déphasante (A) étant plane, de sorte que la première face (A1) et la deuxième face (A2) forment un angle θ, dont la valeur est comprise entre 10 et 30 mrad.

7. Spectromètre selon l'une des revendications 1 à 5, la première face (A1) de la couche déphasante (A), comportant des marches ($M_i$), parallèles à la deuxième face (A2), les marches ($M_i$) étant séparées par des contremarches ($CM_i$), de préférence perpendiculaires à la deuxième face (A2).

8. Spectromètre selon l'une des revendications 1 à 7, la lame étant agencée de sorte que la première face (B1) de la couche de support (B) est disposée entre le plan de détection (PO) et la seconde face de la couche support.

9. Spectromètre selon la revendication selon l'une des revendications 1 à 8, des moyens étant placés entre la source lumineuse (S) et la lame interférométrique monolithique (LM) et/ou entre la lame interférométrique monolithique (LM) et le plan de détection optique (PO), aptes à faire coïncider une figure d'interférence de la source lumineuse (S) avec le plan de détection optique (PO).

10. Spectromètre selon la revendication 9, lesdits moyens comportant une cale ou entretoise (CE) disposée entre le plan de détection optique (PO) et la première face (A1, B1), ou bien entre le plan de détection optique (PO) et un plan sur lequel repose le dispositif de détection optique, de sorte qu'un angle formé entre le plan de détection optique (PO) et la première ou la deuxième face de la couche déphasante soit adapté ou choisi pour qu'un plan de localisation (PI) produit par ladite couche déphasante soit confondu ou sensiblement confondu avec le plan de détection optique (PO).

11. Spectromètre selon l'une des revendications 9 ou 10, le plan de détection comportant des moyens de mesure (DO) des interfranges de la figure d'interférence produite par la lame interférométrique monolithique (LM).

12. Spectromètre selon la revendication 11, comportant en outre des moyens de traitement pour calculer le spectre de fréquences de la source lumineuse (S) à partir des mesures réalisées par les moyens de mesure (DO).

13. Procédé de réalisation d'un spectromètre statique à transformée de Fourier extra-plat à deux ondes selon la revendication 1 comprenant un plan de détection optique (PO), la fabrication de la lame comportant les étapes suivantes :

• Prendre une unique couche déphasante (A) en un premier matériau (1) d'indice optique $n_A$, la couche déphasante étant transparente à au moins une longueur d'onde de la source lumineuse (S), la couche déphasante comportant une première face (A1) et une deuxième face (A2) en vis-à-vis ;
• Prendre une couche de support (B) en un deuxième matériau (2), d'indice optique $n_B$ différent de l'indice optique $n_A$, la couche de support étant transparente à au moins une longueur d'onde de la source lumineuse (S), la couche de support comportant une première face (B1) en vis-à-vis et parallèle à une deuxième face (B2) ;
• Joindre la deuxième face (A2) de la couche déphasante (A) et la deuxième face (B2) de la couche de support (B) par adhésion moléculaire ou par collage ou par l'intermédiaire d'une couche de maintien,

• réaliser dans la couche déphasante (A) au moins un évidement ou retrait partiel du premier matériau (1), de sorte à ce que ladite première face (A1) comporte au moins un élément ou une surface non parallèle à ladite deuxième face (A2), pour former une lame interférométrique monolithique (LM), la couche déphasante formant au moins une cavité pleine partiellement résonante (C, $C_i$) délimitée par un premier dioptre comprenant la première face (A1) de la couche déphasante (A) et par un deuxième dioptre comprenant la deuxième face (A2) de la couche déphasante et/ou la deuxième face (B2) de la couche de support (B), le coefficient de réflexion moyen R de la cavité pleine partiellement résonante (C, $C_i$) étant inférieur à 70 %, ou de préférence inférieur à 50 %,

le procédé comprenant en outre une étape consistant à disposer des moyens de maintien entre ladite lame et un plan de détection, les moyens de maintien étant configurés de manière à pouvoir faire pivoter la lame par rapport au plan de détection optique.

## Patentansprüche

1. Statisches extraflaches Fourier-Transformations-Spektrometer mit zwei Wellen, umfassend eine optische Detektionsebene (PO) und eine zwischen einer Lichtquelle (S) und der optischen Detektionsebene (PO) platzierte Vorrichtung, wobei die Vorrichtung es erlaubt, eine Lokalisierungsebene (PI) einer Interferenzfigur der Lichtquelle (S) zu erhalten, wenn das Licht die Vorrichtung durchläuft, mit der optischen Detektionsebene (PO) zusammenfallend, wobei die Vorrichtung **dadurch gekennzeichnet ist, dass** sie umfasst:

   - eine einzelne Phasenverschiebungsschicht (A) aus einem ersten Material (1) mit optischem Index $n_A$, welches für wenigstens eine Wellenlänge der Lichtquelle (S) transparent ist, wobei die Phasenverschiebungsschicht eine erste Fläche (A1) und eine gegenüberliegende zweite Fläche (A2) umfasst, wobei die erste Fläche (A1) wenigstens ein Element oder eine Fläche umfasst, welche/s nicht parallel zu der zweiten Fläche (A2) ist;
   - eine Trageschicht (B) aus einem zweiten Material (2) mit optischem Index nB, welcher verschieden von dem optischen Index nA ist, transparent für wenigstens eine Wellenlänge der Lichtquelle (S), wobei die Trageschicht eine erste Fläche (B1) gegenüber und parallel zu einer zweiten Fläche (B2) umfasst;
   - wobei die zweite Fläche (A2) der Phasenverschiebungsschicht (A) und die zweite Fläche (B2) der Trageschicht (B) miteinander durch molekulare Adhäsion oder durch Kleben oder durch Vermittlung durch eine Halteschicht oder durch die Vorspannung eines mechanischen Elements verbunden sind, so dass eine monolithische interferometrische Kante (LM) gebildet ist, wobei der zwischen der optischen Detektionsebene (PO) und der ersten (A1) oder der zweiten (A2) Fläche der Phasenverschiebungsschicht A gebildete Winkel anpassbar ist als Funktion des Einfallswinkels des Lichtstrahls auf der Fläche (A1, A2), so dass die Lokalisierungsebene (PI) mit der optischen Detektionsebene (PO) zusammenfällt, um den Kontrast zu maximieren, wobei die Phasenverschiebungsschicht wenigstens eine teilweise resonante gefüllte Kavität (C, Ci) bildet, welche durch einen ersten Diopter begrenzt ist, welcher die erste Fläche (A1) der Phasenverschiebungsschicht (A) umfasst, sowie durch einen zweiten Diopter, welcher die zweite Fläche (A2) der Phasenverschiebungsschicht und/oder die zweite Fläche (B2) der Trageschicht (B) umfasst, wobei der mittlere Reflexionskoeffizient R der teilweise resonanten gefüllten Kavität (C, Ci) kleiner ist als 70%, vorzugsweise kleiner als 50%,

   wobei das Spektrometer ferner Haltemittel zwischen der Kante und der Detektionsebene umfasst, wobei die Haltemittel derart eingerichtet sind, dass sie die Kante bezüglich der optischen Detektionsebene schwenken können.

2. Spektrometer nach einem der vorhergehenden Ansprüche, wobei der Reflexionskoeffizient der ersten Fläche (B1) der Trageschicht kleiner als 10% oder 5% ist.

3. Spektrometer nach einem der vorhergehenden Ansprüche, wobei der optische Index $n_A$ größer als der optische Index $n_B$ ist.

4. Spektrometer nach einem der vorhergehenden Ansprüche, wobei der optische Index $n_A$ zwischen 1,3 und 4 beträgt, vorzugsweise zwischen 2,5 und 4; wobei der optische Index $n_B$ zwischen 1,3 und 4 beträgt, vorzugsweise zwischen 1,3 und 2,4.

5. Spektrometer nach einem der vorhergehenden Ansprüche, wobei eine halbreflektierende Schicht die erste Fläche (A1) und/oder die zweite Fläche (A2) der Phasenverschiebungsschicht (A) bedeckt.

6.  Spektrometer nach einem der vorhergehenden Ansprüche, wobei die erste Fläche (A1) der Phasenverschiebungsschicht (A) eben ist, so dass die erste Fläche (A1) und die zweite Fläche (A2) einen Winkel θ bilden, dessen Wert zwischen 10 und 30 mrad beträgt.

7.  Spektrometer nach einem der Ansprüche 1 bis 5, wobei die erste Fläche (A1) der Phasenverschiebungsschicht (A) Stufen ($M_i$) umfasst, welche parallel zu der zweiten Fläche (A2) sind, wobei die Stufen ($M_i$) durch Gegenstufen ($CM_i$) getrennt sind, welche vorzugsweise senkrecht zu der zweiten Fläche (A2) sind.

8.  Spektrometer nach einem der Ansprüche 1 bis 7, wobei die Kante derart eingerichtet ist, dass die erste Fläche (B1) der Trageschicht (B) zwischen der Detektionsebene (PO) und der zweiten Fläche der Trageschicht angeordnet ist.

9.  Spektrometer nach einem der Ansprüche 1 bis 8, wobei die Mittel, welche zwischen der Lichtquelle (S) und der monolithischen interferometrischen Kante (LM) und/oder zwischen der monolithischen interferometrischen Kante (LM) und der optischen Detektionsebene (PO) platziert sind, in der Lage sind, eine Interferenzfigur der Lichtquelle (S) mit der optischen Detektionsebene (PO) zusammenzuführen.

10. Spektrometer nach Anspruch 9, wobei die Mittel einen Keil oder ein Abstandselement (CE) umfassen, welcher/welches zwischen der optischen Detektionsebene (PO) und der ersten Fläche (A1, B1) oder zwischen der optischen Detektionsebene (PO) und einer Ebene angeordnet ist, an welcher sich die optische Detektionsvorrichtung befindet, so dass ein zwischen der optischen Detektionsebene (PO) und der ersten oder der zweiten Fläche der Phasenverschiebungsschicht gebildeter Winkel derart eingerichtet oder ausgewählt ist, dass eine Lokalisierungsebene (Pl), welche durch die Phasenverschiebungsschicht erzeugt ist, mit der optischen Detektionsebene (PO) zusammenfällt oder im Wesentlichen zusammenfällt.

11. Spektrometer nach einem der Ansprüche 9 oder 10, wobei die Detektionsebene Mittel zum Messen (DO) von Streifenabständen der Interferenzfigur umfasst, welche durch die monolithische interferometrische Kante (LM) erzeugt wird.

12. Spektrometer nach Anspruch 11, ferner umfassend Verarbeitungsmittel zum Berechnen des Frequenzspektrums der Lichtquelle (S) ausgehend von den durch die Mittel zum Messen (DO) durchgeführten Messungen.

13. Verfahren zum Herstellen eines statischen extraflachen Fourier-Transformations-Spektrometers mit zwei Wellen nach Anspruch 1, umfassend eine optische Detektionsebene (PO), wobei die Herstellung der Kante die folgenden Schritte umfasst:

    - Bereitstellen einer einzelnen Phasenverschiebungsschicht (A) aus einem ersten Material (1) mit optischem Index $n_A$, wobei die Phasenverschiebungsschicht transparent für wenigstens eine Wellenlänge der Lichtquelle (S) ist, wobei die Phasenverschiebungsschicht eine erste Fläche (A1) und eine gegenüberliegende zweite Fläche (A2) umfasst;
    - Bereitstellen einer Trageschicht (B) aus einem zweiten Material (2) mit einem von dem optischen Index $n_A$ verschiedenen optischen Index $n_B$, wobei die Trageschicht für wenigstens eine Wellenlänge der Lichtquelle (S) transparent ist, wobei die Trageschicht eine erste Fläche (B1) gegenüber und parallel zu einer zweiten Fläche (B2) umfasst;
    - Verbinden der zweiten Fläche (A2) der Phasenverschiebungsschicht (A) und der zweiten Fläche (B2) der Trageschicht (B) durch molekulare Adhäsion oder durch Kleben oder durch die Vermittlung einer Halteschicht,
    - Herstellen von wenigstens einer teilweisen Aussparung oder Abtragung des ersten Materials (1) in der Phasenverschiebungsschicht (A) derart, dass die erste Fläche (A1) wenigstens ein Element oder eine Fläche umfasst, welche nicht parallel zu der zweiten Fläche (A2) ist, um eine monolithische interferometrische Kante (LM) zu bilden, wobei die Phasenverschiebungsschicht wenigstens eine teilweise resonante gefüllte Kavität (C, $C_i$) bildet, welche durch einen ersten Diopter begrenzt ist, welcher die erste Fläche (A1) der Phasenverschiebungsschicht (A) umfasst, sowie durch einen zweiten Diopter, welcher die zweite Fläche (A2) der Phasenverschiebungsschicht und/oder die zweite Fläche (B2) der Trageschicht (B) umfasst, wobei der mittlere Reflexionskoeffizient R der teilweise resonanten gefüllten Kavität (C, $C_i$) kleiner als 70% ist, vorzugsweise kleiner als 50%,

    wobei das Verfahren ferner einen Schritt umfasst, welcher daraus besteht, Haltemittel zwischen der Kante und einer Detektionsebene anzuordnen, wobei die Haltemittel dazu eingerichtet sind, die Kante bezüglich der optischen Detektionsebene schwenken zu können.

**Claims**

1.  A two-wave extra-flat Fourier-transformed static spectrometer comprising an optical detection plane (PO) and a device placed between a light source (S) and said optical detection plane (PO), said device making it possible to obtain a location plane (PI) of an interference pattern of the light source (S), the light of which passes through the device, coinciding with the optical detection plane (PO), said device being **characterized in that** it includes:

    - a single phase-shifting layer (A) made from a first material (1) with optical index $n_A$, transparent at least at one wavelength of the light source (S), the phase-shifting layer including a first face (A1) and a second face (A2) opposite it, said first face (A1) including at least one element or surface not parallel to said second face (A2);
    - a support layer (B) made from a second material (2), with optical index nB different from optical index nA, transparent at least at one wavelength of the light source (S), the support layer including a first face (B1) across from and parallel to a second face (B2);
    - the second face (A2) of the phase-shifting layer (A) and the second face (B2) of the support layer (B) being joined by molecular adhesion or by gluing or via maintaining layer or by means of a mechanical part, so as to form a monolithic interferometric plate (LM), the angle formed between the optical detection plane (PO) and the first (A1) or the second (A2) face of the phase-shifting layer (A) being adaptable, based on the incidence angle of the light beam on said face (A1, A2), so that the location plane (PI) is combined with said optical detection plane (PO), so as to maximize the contrast, the phase-shifting layer forming at least one partially resonant full cavity (C, Ci) delimited by a first diopter comprising the first face (A1) of the phase-shifting layer (A) and by a second diopter comprising the second face (A2) of the phase-shifting layer and/or the second face (B2) of the support layer (B), the average reflection coefficient R of the partially resonant full cavity (C, Ci) being less than 70%, or preferably less than 50%,

    the spectrometer further comprising maintaining means between said plate and the detection plane, the maintaining means being configured so as to be able to pivot the plate relative to the optical detection plane.

2.  The spectrometer according to one of the preceding claims, the reflection coefficient of the first face (B1) of the support layer being less than 10% or 5%.

3.  The spectrometer according to one of the preceding claims, the optical index $n_A$ being greater than the optical index $n_B$.

4.  The spectrometer according to one of the preceding claims, the optical index $n_A$ being between 1.3 and 4, preferably between 2.5 and 4; the optical index $n_B$ being between 1.3 and 4, preferably between 1.3 and 2.4.

5.  The spectrometer according to one of the preceding claims, a semi-reflective layer covering the first face (A1) and/or the second face (A2) of the phase-shifting layer (A).

6.  The spectrometer according to one of the preceding claims, the first face (A1) of the phase-shifting layer (A) being planar, such that the first face (A1) and the second face (A2) form an angle $\theta$, the value of which is between 10 and 30 mrad.

7.  The spectrometer according to one of claims 1 to 5, the first face (A1) of the phase-shifting layer (A) including steps ($M_i$), parallel to the second face (A2), the steps ($M_i$) being separated by counter-steps ($CM_i$), preferably perpendicular to the second face (A2).

8.  The spectrometer according to one of claims 1 to 7, the plate being arranged such that the first face (B1) of the support layer (B) is arranged between the detection plane (PO) and the second face of the support layer.

9.  The spectrometer according to claim [sic] according to one of claims 1 to 8, means being placed between the light source (S) and the monolithic interferometric plate (LM) and/or between the monolithic interferometric plate (LM) and the optical detection plane (PO), capable of causing an interference pattern of the light source (S) to coincide with the optical detection plane (PO).

10. The spectrometer according to claim 9, said means including a shim or spacer (CE) arranged between the optical detection plane (PO) and the first face (A1, B1), or between the optical detection plane (PO) and a plane on which the optical detection device rests, such that an angle formed between the optical detection plane (PO) and the first or second face of the phase-shifting layer is adapted or chosen so that a location plane (PI) produced by said phase-shifting layer is combined or substantially combined with the optical detection plane (PO).

**11.** The spectrometer according to one of claims 9 or 10, the detection plane including measuring means (DO) for measuring the fringe spacing of the interference pattern produced by the monolithic interferometric plate (LM).

**12.** The spectrometer according to claim 11, further including processing means for calculating the frequency spectrum of the light source (S) from measurements done by the measuring means (DO).

**13.** A method for producing a two-wave extra-flat Fourier-transformed static spectrometer according to claim 1 comprising an optical detection plane (PO), the manufacture of the plate including the following steps:

> • Taking a single phase-shifting layer (A) made from a first material (1) with optical index $n_A$, the phase-shifting layer being transparent at least at one wavelength of the light source (S), the phase-shifting layer including a first face (A1) and a second face (A2) opposite it;
> • Taking a support layer (B) made from a second material (2), with optical index $n_B$ different from the optical index $n_A$, the support layer being transparent at least at one wavelength of the light source (S), the support layer including a first face (B1) opposite and parallel to a second face (B2);
> • Joining the second face (A2) of the phase-shifting layer (A) and the second face (B2) of the support layer (B) by molecular adhesion or by gluing or via a maintaining layer,
> • producing, in the phase-shifting layer (A), at least one recess or partial removal of the first material (1), such that said first face (A1) includes at least one element or surface not parallel to said second face (A2), to form a monolithic interferometric plate (LM), the phase-shifting layer forming at least one partially resonant full cavity $(C, C_i)$ delimited by a first diopter comprising the first face (A1) of the phase-shifting layer (A) and by a second diopter comprising the second face (A2) of the phase-shifting layer and/or the second face (B2) of the support layer (B), the average reflection coefficient R of the partially resonant full cavity $(C, C_i)$ being less than 70%, or preferably less than 50%,

the method further comprising a step consisting of arranging maintaining means between said plate and a detection plane, the maintaining means being configured so as to be able to pivot the plate relative to the optical detection plane.

FIG. 1

FIG. 2

FIG. 3

FIG. 4

FIG. 5

FIG. 6

Ⓢ

A
1
B
2
LM

CE

B1

CE

PO

DO

# FIG. 7A

Ⓢ

B
2
LM

A
1

CE

CE

PO

DO

# FIG. 7B

FIG. 8

FIG. 9

FIG. 10A

FIG. 10B

EP 2 791 636 B1

# FIG. 11A

# FIG. 11B

25

FIG. 11C

FIG. 11D

## RÉFÉRENCES CITÉES DANS LA DESCRIPTION

**Documents brevets cités dans la description**

- US 4822998 A
- US 20060209413 A
- FR 2926635
- US 6016199 A
- EP 1482288 A1
- FR 2855608
- US 20080285165 A
- US 20080186508 A1

**Littérature non-brevet citée dans la description**

- Intégration d'un microspectromètre statique par transformée de Fourier su un plan focal infrarouge. **M. SYLVAIN ROMMELUÈRE.** thèse de doctorat. université de Paris Sud, 2007